# EUROPEAN PATENT SPECIFICATION

(11) **EP 3 539 297 B1**
(45) Date of publication and mention of the grant of the patent: **20.11.2024**
(21) Application number: 18760384.0
(22) Date of filing: 02.03.2018
(51) Int. Cl.: H04N 21/2343, H04N 21/47, H04N 21/462, H04N 21/239, H04N 21/643, H04N 21/436, H04N 21/2387, H04N 21/2385, H04N 21/482, H04N 21/472, G06F 3/04842

(54) **DISPLAY DEVICE AND LINKAGE SERVICE METHOD**
ANZEIGEVORRICHTUNG UND VERBINDUNGSDIENSTVERFAHREN
DISPOSITIF D'AFFICHAGE ET PROCÉDÉ DE SERVICE DE LIAISON

(30) Priority: 02.03.2017 KR 20170026953
(43) Date of publication of application: 18.09.2019
(73) Proprietor: Samsung Electronics Co., Ltd., Suwon-si, Gyeonggi-do 16677 (KR)
(72) Inventor: CHOI, Myung Kwan, Suwon-si Gyeonggi-do 16707 (KR); KYOUN, Jae Ki, Yongin-si Gyeonggi-do 17072 (KR); YUN, Ha Jeong, Seoul 06266 (KR); JUN, Yu Hyeon, Seoul 03446 (KR); CHO, Eun Joo, Hwaseong-si Gyeonggi-do 18438 (KR)
(74) Representative: Appleyard Lees IP LLP
(86) International application number: PCT/KR2018/002524
(87) International publication number: WO 2018/160030

(56) References cited:
- KR-A- 20170 021 494
- KR-B1- 101 564 415
- US-A1- 2010 257 561
- US-A1- 2013 055 313
- US-A1- 2013 055 313
- US-A1- 2014 130 100
- US-A1- 2014 282 734
- US-A1- 2016 165 300
- US-B2- 9 529 738

## Description

### Technical Field

The disclosure relates to a display device for providing a digital broadcast according to selection of a user and a linkage service method.

### Background Art

Recently, introducing advanced television systems committee (ATSC) 3.0 into domestic ultra high definition (UHD) standard has been examined. The ATSC 3.0 standard may provide the highest image quality among UHD standard technologies and may be estimated to be favorable to interactive services. The above information is presented as background information only to assist with an understanding of the present disclosure. No determination has been made, and no assertion is made, as to whether any of the above might be applicable as prior art with regard to the present disclosure.

Background information can be found in: US2014/282734, which describes a technique for displaying a content guide with multiple selectable content viewing options; US2010/257561, which describes a program guide module for managing program guide information for a plurality of program items for a plurality of channels; and US2013/055313, which describes an apparatus for providing one or more virtual channel tables corresponding to one or more content sources.

### Disclosure of Invention

### Technical Problem

Contrary to a digital broadcast which does not provide an option of a conventional real-time broadcast, ATSC 3.0 may provide an option for a real-time broadcast through a linkage service. For example, first drama content may be scheduled to broadcast in a time slot (hereinafter referred to as "second time slot") subsequent to a soccer broadcast which is broadcast in a first time slot on a broadcast table of a broadcaster. If a soccer game goes longer than planned, a conventional digital broadcast server broadcasts the first drama content without no longer relaying the soccer broadcast when it is the second time slot from the first time slot. Since the conventional digital broadcast server transmits only the first drama content in the second time slot, a display device may fail to output the soccer broadcast although a viewer wants to more watch the extended soccer game.

However, since a broadcast server complying with the ATSC 3.0 standard broadcasts both of the first drama content and the soccer broadcast in the second time slot, a display device may output at least one of the first drama content and the soccer broadcast in the second time slot. However, ATSC 3.0 does not define a method of a linkage service of providing an option for a real-time broadcast in detail yet.

Aspects of the disclosure are to address at least the above-mentioned problems and/or disadvantages and to provide at least the advantages described below. Accordingly, an aspect of the disclosure is to provide a display device for providing a user's option for a real-time digital broadcast and a linkage service method.

### Technical Solution

In accordance with an aspect of the disclosure, a display device is provided, as recited in appended independent claim 1.

In accordance with another aspect of the disclosure, a linkage service method by a display device is provided, as recited in appended independent claim 10. Preferred features are set out in the appended dependent claims. **Advantageous Effects of**

### Invention

According to the disclosure, the display device may provide a user's option for a real-time digital broadcast.

Other aspects, advantages, and salient features of the disclosure will become apparent to those skilled in the art from the following detailed description, which, taken in conjunction with the annexed drawings, discloses various embodiments of the disclosure.

### Brief Description of Drawings

The above and other aspects, features, and advantages of certain embodiments of the disclosure will be more apparent from the following description taken in conjunction with the accompanying drawings, in which:
FIG. 1 is a block diagram illustrating a configuration of a display device;
FIG. 2 is a drawing illustrating a time when regular broadcast content and linkage content are broadcast;
FIG. 3 is a drawing illustrating a first user interface (UI) image for providing a notification that a linkage service is started;
FIG. 4 is a drawing illustrating a second UI image for providing a notification that a linkage service is finished;
FIG. 5 is a drawing illustrating a linkage service loading image;
FIG. 6 is a drawing illustrating a UI image for providing a notification of a network connection error;
FIG. 7 is a drawing illustrating a UI image for providing a notification of a broadcast server error;
FIGS. 8 and 9 are drawings illustrating a channel information UI image including a key object for selecting linkage content;
FIG. 10 is a drawing illustrating an electronic program guide(EPG) information image including a key object for selecting linkage content;
FIG. 11 is a drawing illustrating a UI screen of a process of starting a linkage service;
FIG. 12 is a drawing illustrating a UI screen of a process of finishing a linkage service;
FIG. 13 is a drawing illustrating a UI screen of a process of selecting a linkage service using a virtual channel;
FIG. 14 is a drawing illustrating a UI screen of a process of selecting a linkage service using a channel of regular broadcast content; and
FIG. 15 illustrates a flowchart of a linkage service method.

### Mode for the Invention

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope of the disclosure. With regard to description of drawings, similar elements may be marked by similar reference numerals.

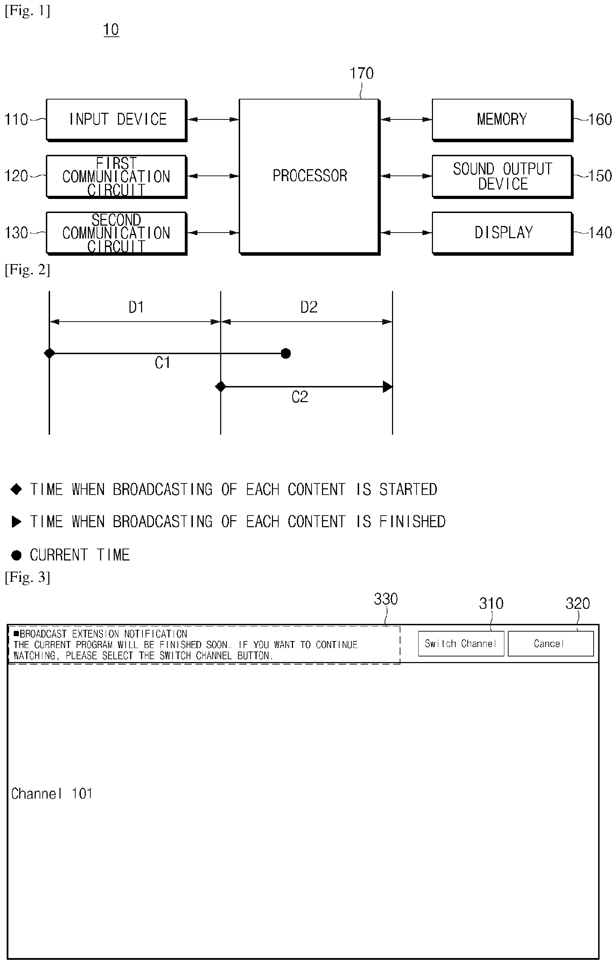

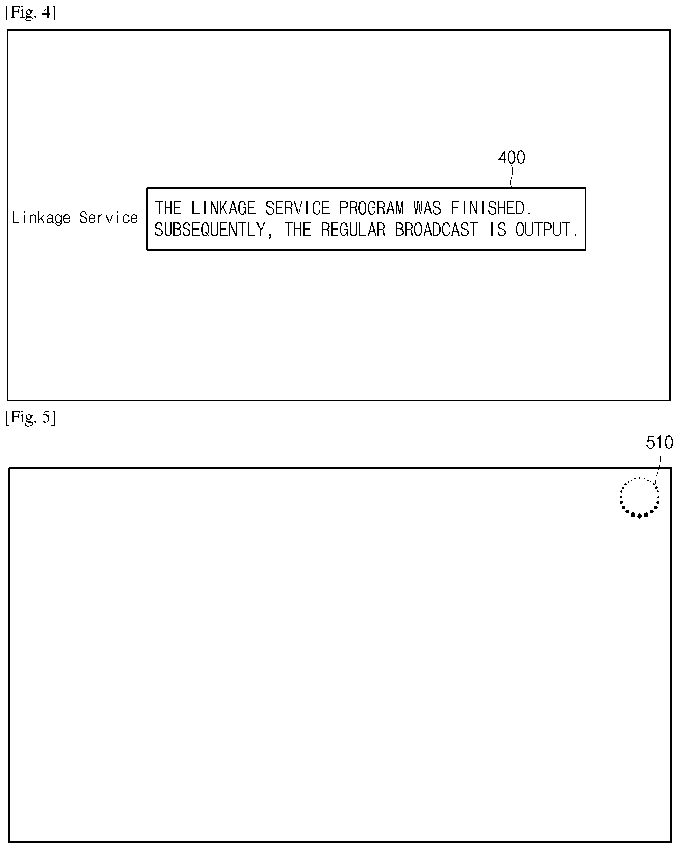

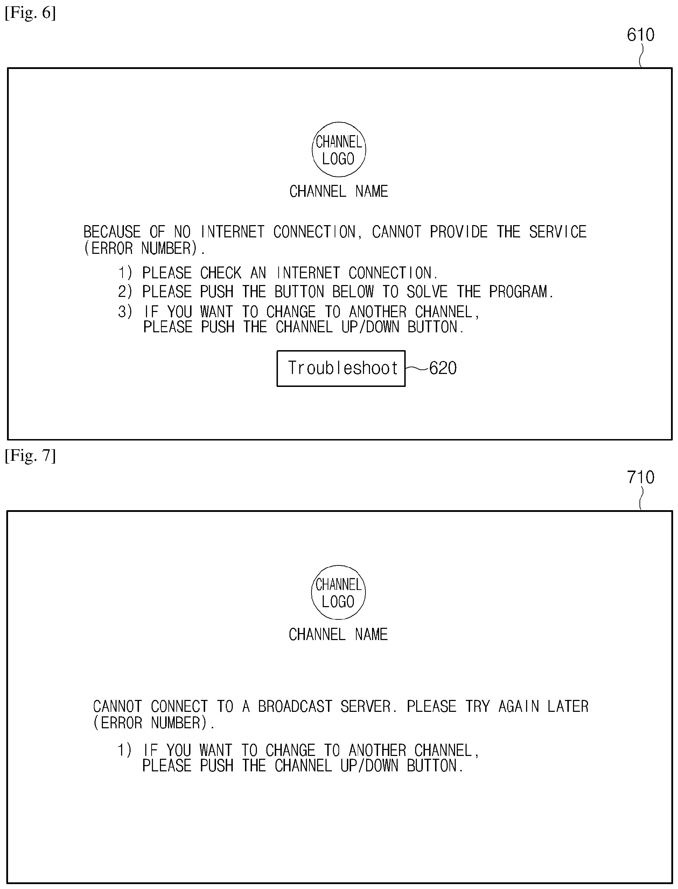

FIG. 1 is a block diagram illustrating a configuration of a display device. FIG. 2 is a drawing illustrating a time when regular broadcast content and linkage content are broadcast. FIG. 3 is a drawing illustrating a first user interface (UI) image for providing a notification that a linkage service is started. FIG. 4 is a drawing illustrating a second UI image for providing a notification that a linkage service is finished. FIG. 5 is a drawing illustrating a linkage service loading image. FIG. 6 is a drawing illustrating a UI image for providing a notification of a network connection error. FIG. 7 is a drawing illustrating a UI image for providing a notification of a broadcast server error.

Referring to FIG. 1, a display device 10 may include an input device 110, a first communication circuit 120, a second communication circuit 130, a display 140, a sound output device 150, a memory 160, and a processor 170. The display device 10 may fail to include at least one of the above-described elements or may further include another element. Alternatively, some of the elements of the display device 10 may be combined with each other to form one entity, so that the functions of the elements may be performed in the same manner as before the combination. An input/output relationship shown in FIG. 1 may be, but is not limited to, only an example for convenience of description.

The display device 10 may include at least one of, for example, a television (TV), a monitor, a notebook, a large format display (LFD), a smartphone, a tablet personal computer (PC), a mobile phone, a video phone, an electronic book (e-book) reader, a desktop PC, a laptop PC, a netbook computer, a personal digital assistant (PDA), a portable multimedia player (PMP), or a digital photo frame.

The input device 110 may receive a user input. For example, the input device 110 may include at least one of a touch sensor, a communication circuit, or an input button.

The touch sensor may sense a touch of an operation means and may output touch coordinates of the operation means. For example, the touch sensor may include at least one of a touch pad (or a touch panel) or a touch controller. The touch pad may be a touch screen. The communication circuit may communicate with a remote control device (e.g., a remote controller, a mouse, or the like). The communication circuit may communicate with the remote control device using various communication schemes, for example, Bluetooth, near field communication (NFC), infrared (IR) communication, a universal serial bus(USB), and a personal system 2 (PS2). The communication circuit may convert a control signal received from the remote control device into a control signal analyzable by the processor 170 and may convert a command signal received from the processor 170 into a command signal corresponding to a communication scheme with the remote control device to transmit the converted command signal. The input button may be provided on the display device 10. For example, the input button may include at least one of a power button, a channel change button, or a volume adjustment button.

The input device 110 may be included in an external electronic device (e.g., a broadcast receiver) connected with the display device 10. In this case, the display device 10 may receive content changed by a user input through the input device 110 or a signal (e.g., an image or audio)of the content. For convenience of description in the specification below, an example input device 110 is a communication circuit for receiving a signal from the remote control device. The remote control device may include an OK button, an upward button assigned to an upward movement function, a downward button assigned to a downward movement function, a leftward button assigned to a leftward movement function, a rightward button assigned to a rightward movement function, a return button, and the like.

The first communication circuit 120 may receive broadcast content transmitted from a broadcast server over a communication network (e.g., a broadcast network or an Internet network). The broadcast content may include real-time broadcast content and video on demand (VOD) broadcast content. The real-time broadcast content may include regular broadcast content and linkage broadcast content which is broadcast by a linkage service.

Referring to FIG. 2, the regular broadcast content (or first content) may be real-time broadcast content which is broadcast in a time slot (e.g., a first time slot D1 or a second time slot D2) scheduled in a broadcast table of each channel. The linkage content (or second content) may be real-time broadcast content which is broadcast outside of a time slot scheduled in a broadcast table. The linkage content may be, for example, content scheduled to broadcast in the first time slot D1 in a broadcast table of a first channel, but may be extended and broadcast to at least a portion of the second time slot D2 (e.g., a current time) by a linkage service since the broadcasting is not completed in the first time slot D 1.

As shown in FIG. 2, first regular broadcast content C1 may be scheduled to broadcast in the first time slot D1 of a broadcast table, and second regular broadcast content C2 may be scheduled to broadcast in the second time slot D2 of the broadcast table. The broadcast server may broadcast the first regular broadcast content C1 in the first time slot D1 and may broadcast the second regular broadcast content C2 in the second time slot D2, like the broadcast table. When the broadcasting of the first regular broadcast content C1 is not finished in the first time slot D1, the broadcast server may provide the first regular broadcast content C1 in the second time slot D2 by the linkage service. For example, when the broadcasting of the first regular broadcast content C1 is not finished in the first time slot D1 may be when there is a situation where breaking news are broadcast while the first regular broadcast content C1 is broadcast in the first time slot D1, when a live broadcast goes longer than planned in the case where the first regular broadcast content C1 is broadcast live, or the like.

The broadcast server may transmit regular broadcast content and linkage content over the same communication network. The broadcast server may transmit both of the regular broadcast content and the linkage content over a broadcast network or an Internet network. For another example, the broadcast server may transmit one of the regular broadcast content or the linkage content over the broadcast network and may transmit the other of the regular broadcast content or the linkage content over the Internet network.

Return to FIG. 1, the first communication circuit 120 may be configured in the form of simultaneously or selectively receiving regular broadcast content and linkage content from the broadcast server. For example, when both of the regular broadcast content and the linkage content are transmitted over the broadcast network, the first communication circuit 120 may include a dual tuner. For another example, when one of the regular broadcast content or the linkage content is received over the Internet network and when the other of the regular broadcast content or the linkage content is received over the broadcast network, the first communication circuit 120 may be configured in the form of supporting both of the broadcast network and the Internet network.

The second communication circuit 130 may communicate with an external electronic device. The external electronic device may be at least one of, for example, a monitor, a notebook, a digital photo frame, a smartphone, a tablet PC, a mobile phone, a video phone, an e-book reader, a desktop PC, a laptop PC, a netbook computer, a PDA, or a PMP. The external electronic device may be a device configured to communicate with the display device 10 through the second communication circuit 130.

The display 140 may include, for example, a liquid crystal display (LCD), a light emitting diode (LED) display, an organic LED (OLED) display, or an electronic paper display. The display 140 may display, for example, a variety of content (e.g., a text, an image, a video, an icon, a symbol, and/or the like) to a user.

The sound output device 150 may output an audio of playback content. The sound output device 150 may include at least one of an amplifier or a speaker. The amplifier may amplify volume of content, and the speaker may output the amplified audio of the content.

The memory 160 may be a volatile memory (e.g., a random access memory (RAM) or the like), a nonvolatile memory (e.g., a read only memory (ROM), a flash memory, or the like), or a combination thereof. The memory 160 may store, for example, a command or data associated with at least one other element(s) of the display device 10.

The processor 170 may include at least one of, for example, a central processing unit (CPU), a graphic processing device (GPU), a microprocessor, an application processor, an application specific integrated circuit (ASIC), or field programmable gate arrays (FPGA) and may have a plurality of cores. The processor 170 may perform an arithmetic operation or data processing associated with control and/or communication of at least one other element(s) of the display device 10.

When a channel is selected by the input device 100, the processor 170 may control the first communication circuit 120 to receive content (e.g., regular broadcast content) of the selected channel. For example, the processor 170 may adjust a receive frequency such that the first communication circuit 120 may receive broadcast content of the selected channel. When the content of the selected channel is received via the first communication circuit 120, the processor 170 may output an image of the received image on the display 140 and may output an audio of the received content through the sound output device 150.

When the content of the selected channel is regular broadcast content, the processor 170 may receive linkage service information while the regular broadcast content of the selected channel is output. The linkage service information may be, for example, information of providing a notification that first regular broadcast content scheduled to broadcast in a first time slot is extended and broadcast to at least a portion of a second time slot. The linkage service information may be received, for example, before the first time slot is finished.

When the linkage service information is received, the processor 170 may display a first UI image on the display 140. For example, the processor 170 may output the first UI image immediately before the first time slot is finished (e.g., one minute before the first time slot is finished). Referring to FIG. 3, the first UI image may include a first key object 310 for selecting to watch regular broadcast content and a second key object 320 for selecting to watch linkage content. The first UI image may include a guide text 330 for providing a notification that a linkage service will be started.

When a first signal for selecting the first key object 310 is received from the input device 110, the processor 170 may select linkage content as watching content. The first signal may be a signal received according to an operation of an OK button of a remote control device in a state where the first key object 310 is specified. When a second signal for selecting the second key object 320 is received from the input device 110, the processor 170 may select regular broadcast content as watching content. The second signal may be a signal received according to an operation of a return button of the remote control device. The processor 170 may output content selected between the regular broadcast content and the linkage content in a second time slot capable of selecting the regular broadcast content and the linkage content.

When linkage content is selected as watching content while outputting regular broadcast content, the processor 170 may tune a channel to receive the linkage content or may transmit a request for content to the broadcast server. For example, the processor 170 may transmit a request for linkage content to the broadcast server over an Internet network and may wait until the linkage content is received over a broadcast network or the Internet network. For another example, when the linkage content is received over the broadcast network, the processor 170 may tune a channel of the first communication circuit 120. In an embodiment, the processor 170 may provide a notification that linkage content is being prepared for being received on the display 140 while the linkage content is prepared for being received.

When at least one of information of linkage content or the linkage content is received, the processor 170 may assign a virtual channel number to the linkage content. The virtual channel number may be for at least one of selecting to watch the linkage content and outputting information of the linkage content. The virtual channel number may include at least one of a channel number of regular broadcast content associated with the linkage content or a virtual channel code. For example, when a channel number of regular broadcast content provided by a linkage service is "11-1" and when a virtual channel code is "A", the processor 170 may assign the virtual channel number of the linkage content to "11-1A". As such, the processor 170 may assign a virtual channel number for linkage content in a form where a user easily distinguish linkage content and easily determine regular broadcast content associated with the linkage content.

The processor 170 may include information of linkage content associated with a virtual channel number in at least one of channel list information or EPG information. For example, since the channel list information and the EPG information are sorted in an order of channel numbers, the processor 170 may include a virtual channel number and information of linkage content in a location according to an order of virtual channel numbers in a channel list of at least one of the channel list information or the EPG information.

When a virtual channel number of linkage content is selected in a channel up or down process through the input device 100 is selected or when a virtual channel number is selected by the input device 110, the processor 170 may output the linkage content. As such, since a virtual channel number is assigned to the linkage content, although a channel is tuned while the linkage content is output, the processor 170 may enter a virtual channel corresponding to the linkage content again. For example, when a virtual channel number corresponding to linkage content is selected by channel up/down, channel designation, or the like, the processor 170 may output the linkage content. For another example, when at least one of a virtual channel number or information of linkage content is selected from channel list information and EPG information, the processor 170 may output the linkage content.

The processor 170 may output a UI image capable of distinguishing between linkage content and regular broadcast content. For example, the processor 170 may display a symbol specified for linkage content on at least one of a virtual channel number and information of the linkage content which are included in at least one of channel list information or EPG information. For another example, the processor 170 may display a symbol specified for linkage content on a channel information UI image (e.g., an info banner) of the linkage content. The specified symbol may include at least one of, for example, a specified text, a specified icon, or the like.

The processor 170 may output both of linkage content and regular broadcast content. For example, the processor 170 may output images of the linkage content and the regular broadcast content at the same size. The processor 170 may output an image of content selected by the input device 110 between linkage content and regular broadcast content on a left side of the display 140 and may output an image of the other image on a right side of the display 140. For another example, the processor 170 may output images of linkage content and regular broadcast content at different sizes. The processor 170 may output an image of content selected by the input device 110 on the entire region of the display 140 and may output an image of the other content on a partial region of the display 140 (e.g., in a picture in picture (PIP) form). For another example, the processor 170 may display linkage content and regular broadcast content on different displays. The processor 170 may display an image of content selected by the input device 110 on the display 140 and may display the other content on a display of an external electronic device. When displaying linkage content and regular broadcast content on the same display, the processor 170 may output an audio of content selected between the linkage content and the regular broadcast content through the sound output device 150. When able to simultaneously output an audio through a plurality of audio interfaces (e.g., a speaker, an earphone, a headphone, and the like) of the sound output device 150, the processor 170 may output both of linkage content and regular broadcast content. For another example, when displaying linkage content and regular broadcast content on different displays, the processor 170 may output an audio through sound output devices corresponding to the different displays.

The processor 170 may verify that the broadcasting of linkage content is finished while the linkage content is output in a second time slot. When verifying that the broadcasting of the linkage content is finished, as shown in FIG. 4, the processor 170 may output a second UI image 400 for providing a notification that the broadcasting of the linkage content is finished. After outputting the second UI image 400, the processor 170 may output regular broadcast content.

Referring again to FIG. 1, the processor 170 may expose a virtual channel number corresponding to linkage content in only a specified period (e.g., before the linkage content is finished). For example, the processor 170 may expose a virtual channel number in a process of tuning a channel during only a specified period. For another example, the processor 170 may include a virtual channel number in at least one of channel list information or EPG information during only a specified period.

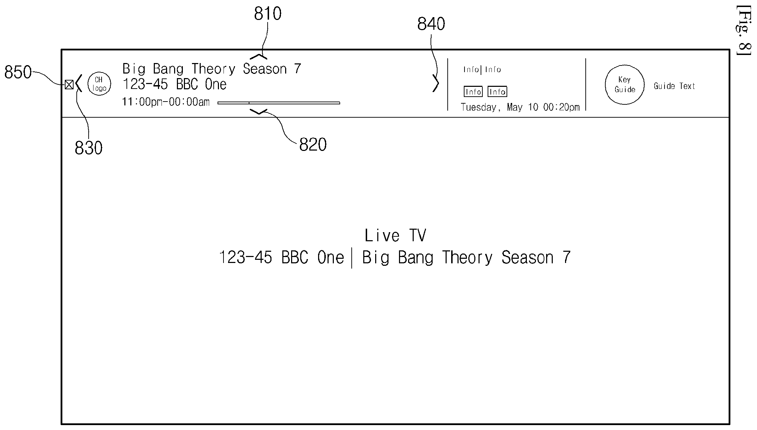

The processor 170 may fail to assign a virtual channel number to linkage content. The processor 170 may fail to assign the virtual channel number to the linkage content and may include at least one key object for selecting to watch the linkage content in a fifth UI image. The fifth UI image may be at least one of channel information or EPG information of regular broadcast content. A description will be given of a corresponding example with reference to FIGS. 8 to 10.

Due to properties of an Internet network, a network delay or a network error may occur in the Internet network. As shown in FIG. 5, when a loading time is needed to receive linkage content, the processor 170 may output a third UI image 510 for providing a notification that it is during loading. When a loading time is needed to receive linkage content, the processor 170 may output a text for providing a notification that it is during loading.

As shown in FIGS. 6 and 7, the processor 170 may output a fourth UI images 610 or 710 for providing a notification of a network error for linkage content. For example, the fourth UI image 610 or 710 may include at least one of an error number(or an error code), a network error number, details of a network error (e.g., no network connection, a server error, or the like), or notification for a method of being out of a channel of linkage content. For another example, the fourth UI image 610 or 710 may include information of linkage content (e.g., a logo, a channel name, and the like of a virtual channel number). For another example, the fourth UI image 610 may include a third key object 620 for entering a trouble shooting guide menu for solving a network error.

FIGS. 8 to 10 are drawings illustrating a UI screen corresponding to linkage content.

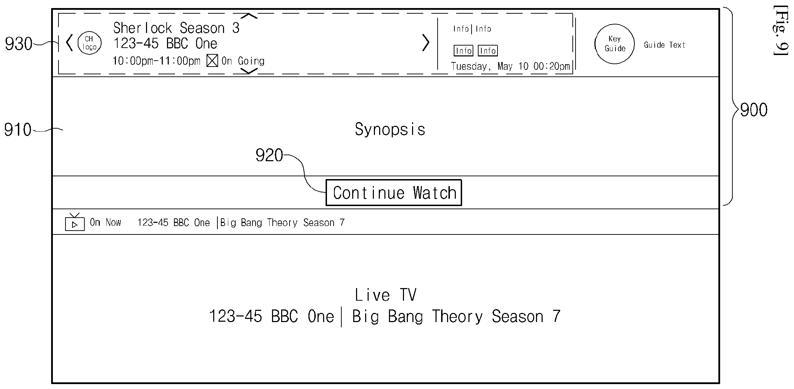

FIGS. 8 and 9 are drawings illustrating a channel information UI image including a key object for selecting linkage content.

Referring to FIG. 8, a channel information UI image of regular broadcast content may include an up key object 810 associated with an upward button of a remote control device, a down key object 820 associated with a downward button of the remote control device, a left key object 830 associated with a leftward button of the remote control device, and a right key object 840 associated with a rightward button, other than information (e.g., Bing Bang Theory Season 7) of content. In this case, when a signal for selecting the up key object 810 is received from an input device 110 of FIG. 1, a processor 170 of FIG. 1 may up-convert a receive channel of a first communication channel 120 of FIG. 1. When a signal for selecting the down key object 820 is received from the input device 110, the processor 170 may down-convert the receive channel of the first communication circuit 120. When a signal for selecting the left key object 830 is received from the input device 110, the processor 170 may output information of just previous regular broadcast content. When a signal for selecting the right key object 840 is received from the input device 110, the processor 170 may output information of future regular broadcast content.

When just previous regular broadcast content of a selected channel is being broadcast to a current time by a linkage service, the processor 170 may display an icon 850 indicating that the just previous regular broadcast content is during the linkage service on a channel information UI image. In this case, after a signal for selecting the left key object 830 is received, when a signal for selecting the icon 850 (e.g., a signal corresponding to an OK button of the remote control device) is received, the processor 170 may output the linkage content which is during the linkage service.

Referring to FIG. 9, when linkage content is selected, the processor 170 may output a sixth UI image 900 including information of the linkage content. For example, the sixth UI image 900 may include content information 930 of the linkage content, synopsis information 910 of the linkage information, and a key object 920 for selecting to watch the linkage content. The processor 170 may display regular broadcast content on a region of a display 140 of FIG. 1, where the sixth UI image 900 is not displayed. When the key object 920 is selected, the processor 170 may output the linkage content.

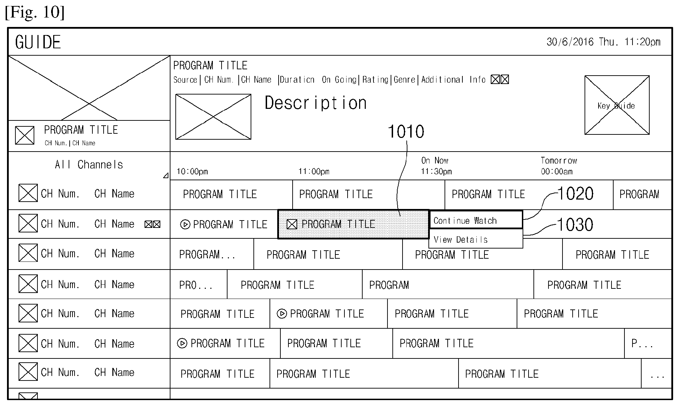

FIG. 10 is a drawing illustrating an EPG information image including a key object for selecting linkage content.

Referring to FIG. 10, a processor 170 of FIG. 1 may include at least one key object for selecting linkage content in an EPG information image. For example, when a signal for selecting information 1010 of content of a channel which is during a linkage service (e.g., a signal received according to a long press of an OK button of the input device 110) is received from an input device 110 of FIG. 1, the processor 170 may output a plurality of key objects 1020 and 1030 as a sublist of the information 1010 of the content. The plurality of key objects 1020 and 1030 may include at least one of the first key object 1020 for selecting linkage content and the second key object 1030 for selecting to display detailed information of the linkage content. When a third signal for selecting the first key object 1020 is received from the input device 110, the processor 170 may output linkage content. The third signal may be, for example, a signal corresponding to an OK button of the remote control device, received in a state where the first key object 1020 is specified by an upward button, a downward button, and the like of the remote control device. When a fourth signal for selecting the second key object 1030 is received from the input device 110, the processor 170 may output the detailed information of the linkage content. The fourth signal may be, for example, a signal corresponding to an OK button, received in a state where the second key object 1030 is specified by the upward button, the downward button, and the like of the remote control device.

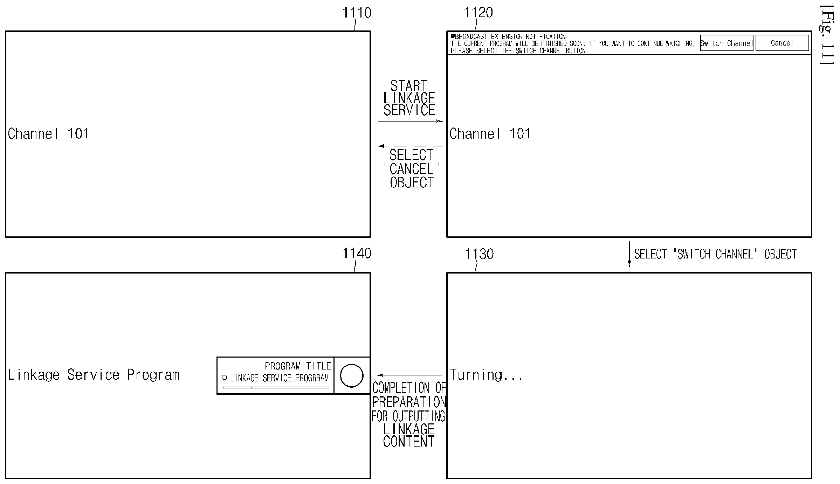

FIG. 11 is a drawing illustrating a UI screen of a process of starting a linkage service.

Referring to FIG. 11, on screen 1110, a processor 170 of FIG. 1 may display regular broadcast content of a channel (e.g., channel 101) selected by an input device 110 of FIG. 1 on a display 140 of FIG. 1.

When linkage service information is received, on screen 1120, the processor 170 may provide a first UI image including a key object for selecting regular broadcast content or linkage content which is being watched. On screen 1120, the first UI image may include a "switch channel" object for selecting regular broadcast content and a "cancel" object for selecting linkage content. The first UI image may include a guide text for providing a notification that regular broadcast content which is being watched is expired and providing a notification that it is possible to watch the regular broadcast content which is being watched by a linkage service.

When a fifth signal for selecting the "switch channel" object is received from the input device 110 while screen 1020 is displayed, on screen 1130, the processor 170 may prepare to receive linkage content. The fifth signal may be a signal received according to an operation of an OK button of a remote control device, received subsequent to a signal corresponding to a leftward button of the remote control device from the input device 110. On screen 1130, the processor 170 may provide a notification of being preparing to receive linkage content. On the other hand, when a sixth signal for selecting the "cancel" object is received from the input device 110, on screen 1110, the processor 170 may output regular broadcast content of the channel (e.g., channel 101) selected on screen 1110. The sixth signal may be, for example, a signal received according to an operation of a return button of the remote control device.

When preparation for outputting the linkage content is completed, on screen 1140, the processor 170 may output linkage content (e.g., a linkage service program).

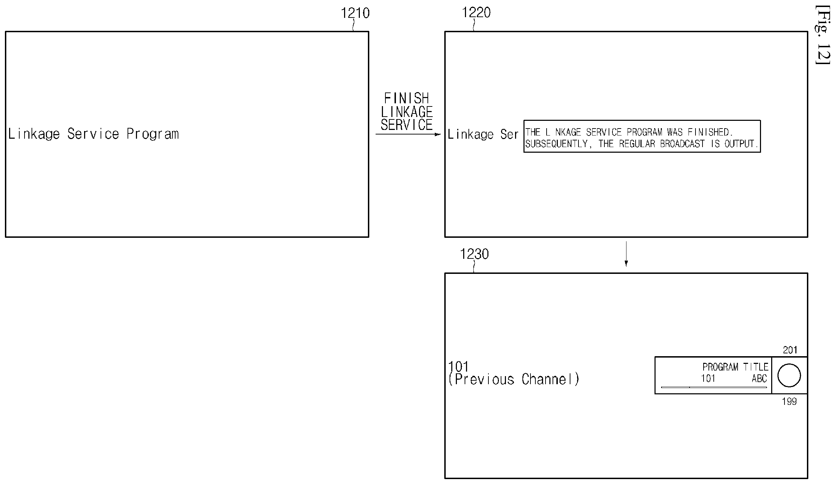

FIG. 12 is a drawing illustrating a UI screen of a process of finishing a linkage service.

Referring to FIG. 12, on screen 1210, a processor 170 of FIG. 1 may verify that a linkage service is finished while linkage content is output. For example, the processor 170 may receive linkage service information for providing a notification that the broadcasting of the linkage content is finished from a broadcast server.

When verifying that the broadcasting of the linkage content is finished, on screen 1220, the processor 170 may output a UI image for providing a notification that the broadcasting of the linkage content is finished.

After outputting the UI image for providing the notification that the broadcasting of the linkage content is finished, on screen 1230, the processor 170 may output regular broadcast content of a channel (e.g., a previous channel) associated with the linkage content. As such, when the broadcasting of the linkage content is finished, the processor 170 may output regular broadcast content associated with the linkage content although a signal for selecting another channel is not received from an input device 110 of FIG. 1.

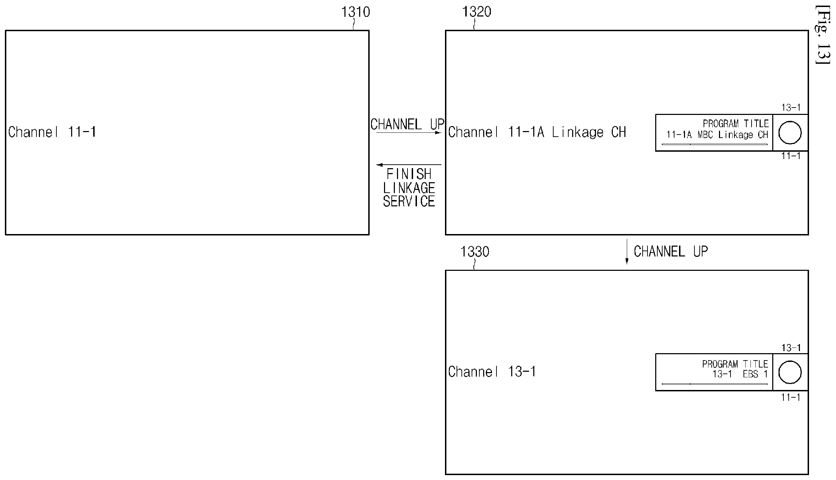

FIG. 13 is a drawing illustrating a UI screen of a process of selecting a linkage service using a virtual channel. FIG. 13 is an example in which a virtual channel for linkage content is generated.

Referring to FIG. 13, on screen 1310, a processor 170 of FIG. 1 may output regular broadcast content of a channel (e.g., channel 11-1) selected by an input device 110 of FIG. 1.

When a virtual channel (e.g., channel 11-1A) of linkage content is selected by tuning a channel (e.g., channel up) while outputting the regular broadcast content, on screen 1320, the processor 170 may output the linkage content.

When a channel is out of the virtual channel (e.g., channel 11-1A) corresponding to the linkage content while outputting the linkage content, on screen 1330, the processor 170 may output regular broadcast content of the selected channel (e.g., channel 11-1). When a linkage service is finished while outputting the linkage content, since a channel is tuned to the selected channel (e.g., channel 11-1), the processor 170 may output regular broadcast content. According to the above-mentioned example, the processor 170 may expose linkage content in a process of tuning a channel as a virtual channel number for linkage content is assigned and may access the linkage content as a virtual channel is selected. The convenience of watching linkage content may be provided.

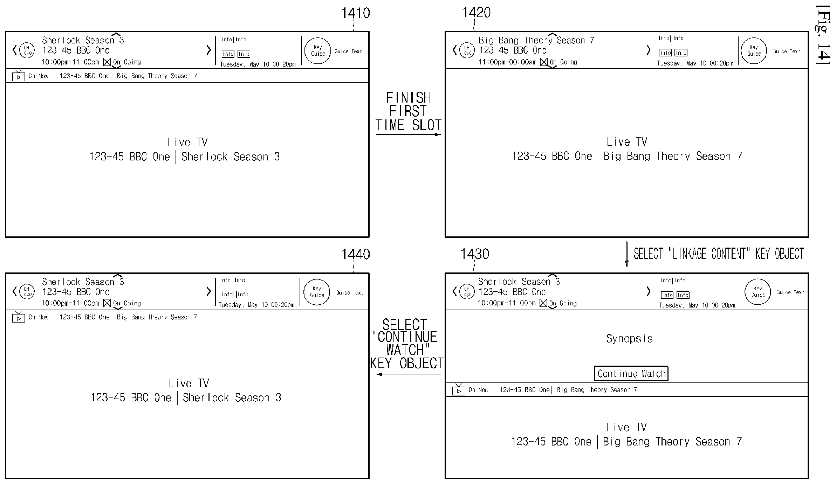

FIG. 14 is a drawing illustrating a UI screen of a process of selecting a linkage service using a channel of regular broadcast content. FIG. 14 is an example in which a virtual channel for linkage content is not generated.

Referring to FIG. 14, on screen 1410, a processor 170 of FIG. 1 may receive and output first regular broadcast content "Sherlock Season 3" which is broadcast over a channel selected in a first time slot. Since the broadcasting of the first regular broadcast content is not completed in the first time slot specified for the first regular broadcast content before the first time slot is finished, the processor 170 may receive linkage service information for providing a notification that the first regular broadcast content will be broadcast by a linkage service.

On screen 1420, the processor 170 may receive and output second regular broadcast content "Big Bang Theory Season 7" which is broadcast over a channel selected in a second time slot subsequent to the first time slot. The processor 170 may include and output a key object for selecting linkage content on information of the second regular broadcast content.

When a signal for selecting the key object for selecting the linkage content is received, on screen 1430, the processor 170 may output at least one of information of the linkage content or the linkage content. For example, after a signal corresponding to a leftward button of a remote control device is received from an input device 110 of FIG. 1, when a signal corresponding to an OK button of the remote control device is received, the processor 170 may output information (e.g., Sherlock Season 3) of the linkage content. The processor 170 may output current regular broadcast content "Big Bang Theory Season 7" together with the information of the linkage content.

When a signal for selecting a "continue watch" key object is received, on screen 1440, the processor 170 may output linkage content "Sherlock Season 3". The processor 170 may display an icon (e.g., 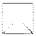 ) indicating that linkage content is being broadcast on a channel information UI image.

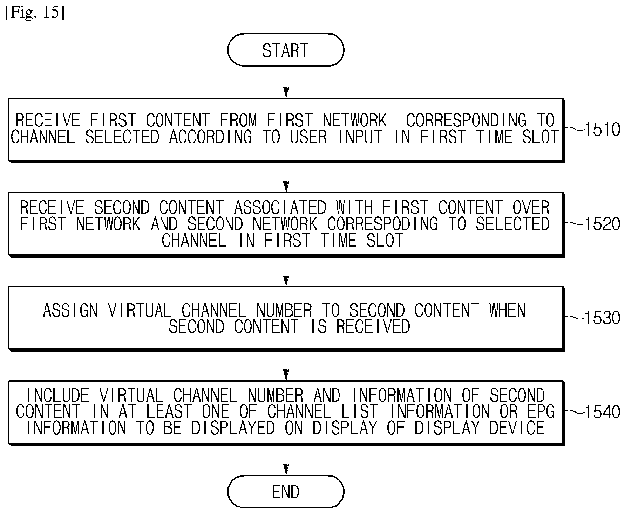

FIG. 15 illustrates a flowchart of a linkage service method.

Referring to FIG. 15, in operation 1510, the processor 170 receives first content from a first network corresponding to a channel selected according to a user input in a first time slot. The first content may be content scheduled to broadcast in the first time slot and be broadcast in the first time slot.

In operation 1520, the processor 170 receives second content associated with the first content over the first network and a second network corresponding to the selected channel in the first time slot. The second content may be content scheduled to broadcast in a second time slot before the first time slot and be extended and broadcast to at least a portion of the first time slot.

In operation 1530, when the second content is received, the processor 170 assigns a virtual channel number to the second content.

In operation 1540, the processor 170 includes the virtual channel number and information of the second content in at least one of channel list information or EPG information to be displayed on a display of the display device.

A display device includes a display (see the number 140 of FIG. 1); an input device (see the number110 of FIG. 1) configured to receive a user input; a first communication circuit (see the number120 of FIG. 1) configured to receive first content from a first network corresponding to a first channel selected according to the user input in a first time slot and receive second content associated with the first content over the first network or a second network corresponding to the first channel; and a processor (see the number170 of FIG. 1) configured to, when the second content is received, assign a virtual channel number to the second content, wherein the first content is content scheduled to broadcast in a first time slot of the first channel and is broadcast in the first time slot, wherein the second content is content scheduled to broadcast in a second time slot before the first time slot and is extended and broadcast to at least a portion of the first time slot. The processor is further configured to include the virtual channel number and information of the second content in at least one of channel list information or electronic program guide(EPG) information displayed on the display.

Wherein the processor is further configured to display a user interface (UI) image, including a first key object for selecting the second content depending on the user input before the first time slot is expired and a second key object for selecting the first content, on the display; when a signal for selecting the first key object by the input device is received, output the second content in the second time slot; and when a signal for selecting the second key object by the input device is received, display the first content in the second time slot.

The processor is further configured to display the second content on the display upon selection of the virtual channel number.

The processor is further configured to when the virtual channel number is selected from the channel list information and the EPG information, display the second content on the display.

The processor is further configured to include a symbol capable of distinguishing the second content in at least one of an info banner of the second content, the virtual channel number, or the information of the second content.

The processor is further configured to when one of the first content or the second content is selected by the input device, display the selected content on the display.

The processor is further configured to display the selected content on an entire region of the display; and display the other content which is not selected between the first content and the second content (unselected content) on a partial region of the display.

The processor is further configured to display the selected content on a left region or a right region of the display; and display the other content which is not selected between the first content and the second content on a region where the selected content is not displayed.

The display device further includes a second communication circuit (see the number 130 of FIG. 1) configured to communicate with an external electronic device, wherein the processor is further configured to when one of the first content or the second content is selected according to the user input, display the selected content on the display; and display the other content which is not selected between the first content and the second content on a display of the external electronic device.

The processor is further configured to when broadcasting of the second content is finished while the second content is output on the display, output the first content on the display.

A linkage service method by a display device, the method includes receiving first content from a first network corresponding to a channel selected according to a user input in a first time slot; receiving second content associated with the first content over the first network and a second network corresponding to the selected channel in the first time slot; when the second content is received, assigning a virtual channel number to the second content; and including the virtual channel number and information of the second content in at least one of channel list information or EPG information to be displayed on a display of the display device. Wherein the first content is content scheduled to broadcast in the first time slot and is broadcast in the first time slot, and wherein the second content is content scheduled to broadcast in a second time slot before the first time slot and is extended and broadcast to at least a portion of the first time slot.

The method further includes receiving linkage service information for providing a notification that the second content which is being broadcast in the first time slot is provided by a linkage service; displaying a UI image, including a first key object for selecting the second content depending on the user input before the first time slot is expired and a second key object for selecting the first content, on the display; when a signal for selecting the first key object is received, outputting the second content in the second time slot; and when a signal for selecting the second key object is received, displaying the first content in the second time slot.

The method further includes verifying whether the virtual channel number is selected according to the user input or whether the virtual channel number is specified and selected; and when the virtual channel number is selected, displaying the second content on the display.

The method further includes when the virtual channel number is selected from the channel list information and the EPG information, displaying the second content on the display.

The method further includes including a symbol capable of distinguishing the second content in at least one of an info banner of the second content, the virtual channel number, or the information of the second content.

The method further includes when the second content is received, outputting the first content and the second content.

The outputting includes displaying content, selected according to the user input between the first content and the second content, on an entire region of the display; and displaying the other content which is not selected between the first content and the second content on a partial region of the display.

The outputting includes displaying content, selected according to the user input between the first content and the second content, on a left region or a right region of the display; and displaying the other content which is not selected between the first content and the second content on a region where the selected content is not displayed.

The outputting includes displaying content, selected according to the user input between the first content and the second content, on the display; and displaying the other content which is not selected between the first content and the second content on a display of an external electronic device.

The method further includes while the second content is output, verifying whether broadcasting of the second content is finished; and when the broadcasting of the second content is finished, outputting the first content.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A display device (10), comprising:
a display (140);
an input device (110) configured to receive a user input;
a first communication circuit (120) configured to:
receive first content from a first network corresponding to a first channel selected according to the user input in a first time slot (D1), wherein the first content comprises a first real-time broadcast content (C1) and the first network comprises a broadcast network, and
receive second content associated with the first content over the first network or a second network corresponding to the first channel; and
a processor (170) configured to, when the second content is received, assign a virtual channel number to the second content,
wherein the first real-time broadcast content (C1) is content scheduled to broadcast in a first time slot (D1) of the first channel and is broadcast in the first time slot (D1),
wherein the second content is content scheduled to broadcast in at least a portion of a a second time slot (D2) when the broadcast schedule of the first real-time broadcast content (C1) is extended to the second time slot (D2),
wherein the second time slot (D2) is after the first time slot (D1) and the second time slot (D2) is a time slot in which a second real-time broadcast content (C2) is scheduled to broadcast, and
wherein the processor (170) is further configured to:
include the virtual channel number and information of the second content in at least one of channel list information or electronic program guide, EPG, information to be displayed on the display;
display a user interface, UI, image, including a first key object (310) for selecting the second content depending on the user input before the second time slot (D2) is expired and a second key object (320) for selecting the second real-time broadcast content (C2), on the display (140);
when a signal for selecting the first key object (310) by the input device (110) is received, display the second content in the second time slot; and
when a signal for selecting the second key object (320) by the input device (110) is received, display the second real-time broadcast content in the second time slot.

2. The display device (10) of claim 1, wherein the processor (170) is further configured to:
display the second content on the display (140) upon selection of the virtual channel number.

3. The display device (10) of claim 1, wherein the processor (170) is further configured to:
when the virtual channel number is selected from the channel list information and the EPG information, display the second content on the display (140).

4. The display device (10) of claim 1, wherein the processor is further configured to:
include a symbol capable of distinguishing the second content in at least one of an info banner of the second content, the virtual channel number, or the information of the second content.

5. The display device (10) of claim 1, wherein the processor (170) is further configured to:
when one of the second real-time broadcast content (C2) or the second content is selected by the input device (110), display the selected content on the display (140).

6. The display device (10) of claim 5, wherein the processor (170) is further configured to:
display the selected content on an entire region of the display (140); and
display an unselected content on a partial region of the display (140).

7. The display device (10) of claim 5, wherein the processor (170) is further configured to:
display the selected content on a left region or a right region of the display (140); and
display an unselected content on a region where the selected content is not displayed.

8. The display device (10) of claim 5, further comprising:
a second communication circuit (130) configured to communicate with an external electronic device,
wherein the processor (170) is further configured to:
when one of the second real-time broadcast content (C2) or the second content is selected according to the user input, display the selected content on the display (140); and
display an unselected content on a display of the external electronic device.

9. The display device (10) of claim 1, wherein the processor (170) is further configured to:
when broadcasting of the second content is finished while the second content is displayed on the display (140), display the second real-time broadcast content (C2) scheduled to be broadcast in the second time slot (D2) on the display (140).

10. A linkage service method by a display device (10), the method comprising:
receiving first content from a first network corresponding to a channel selected according to a user input in a first time slot (D1), wherein the first content comprises a first real-time broadcast (C1) content and the first network comprises a broadcast network;
receiving second content associated with the first content over the first network or a second network corresponding to the selected channel in the first time slot;
when the second content is received, assigning a virtual channel number to the second content; and
including the virtual channel number and information of the second content in at least one of channel list information or EPG information to be displayed on a display (140) of the display device (10),
wherein the first real-time broadcast content (C1) is content scheduled to broadcast in the first time slot (D1) and is broadcast in the first time slot (D1),
wherein the second content is content scheduled to broadcast in at least a portion of a second time slot (D2) when the broadcast schedule of the first real-time broadcast content (C1) is extended to the second time slot (D2),
wherein the second time slot (D2) is after the first time slot (D1) and the second time slot (D2) is a time slot in which a second real-time broadcast content (C2) is scheduled to broadcast, and wherein
the method further comprises:
displaying a user interface, UI, image, including a first key object (310) for selecting the second content depending on the user input before the second time slot (D2) is expired and a second key object (320) for selecting the second real-time broadcast content (C2), on the display (140);
when a signal for selecting the first key object (310) by the input device (110) is received, display the second content in the second time slot; and
when a signal for selecting the second key object (320) by the input device (110) is received, display the second real-time broadcast content in the second time slot.

11. The method of claim 10, further comprising:
receiving linkage service information for providing a notification that the second content which is being broadcast in the second time slot (D2) is provided by a linkage service.

12. The method of claim 10, further comprising:
verifying whether the virtual channel number is selected according to the user input or whether the virtual channel number is specified and selected; and
when the virtual channel number is selected, displaying the second content on the display (140).

13. The method of claim 10, further comprising:
when the virtual channel number is selected from the channel list information and the EPG information, displaying the second content on the display (140).

14. The method of claim 10, further comprising:
including a symbol capable of distinguishing the second content in at least one of an info banner of the second content, the virtual channel number, or the information of the second content.

## Patentansprüche

1. Anzeigegerät (10), umfassend:
eine Anzeige (140);
ein Eingabegerät (110), das zum Empfangen einer Benutzereingabe konfiguriert ist;
eine erste Kommunikationsschaltung (120), die dazu konfiguriert ist:
erste Inhalte von einem ersten Netzwerk zu empfangen, die einem ersten Kanal entsprechen, der gemäß der Benutzereingabe in einem ersten Zeitfenster (D1) ausgewählt wurde, wobei die ersten Inhalte einen ersten Echtzeit-Rundfunkinhalt (C1) umfassen und das erste Netzwerk ein Rundfunknetzwerk umfasst, und
zweiten Inhalt, der mit dem ersten Inhalt verknüpft ist, über das erste Netzwerk oder ein zweites Netzwerk, das dem ersten Kanal entspricht, zu empfangen; und
einen Prozessor (170), der so konfiguriert ist, dass er dem zweiten Inhalt beim Empfangen des zweiten Inhalts eine virtuelle Kanalnummer zuweist,
wobei der erste Echtzeit-Rundfunkinhalt (C1) Inhalt ist, dessen Ausstrahlung in einem ersten Zeitfenster (D1) des ersten Kanals geplant ist und der in dem ersten Zeitfenster (D1) ausgestrahlt wird,
wobei der zweite Inhalt Inhalt ist, dessen Ausstrahlung in zumindest einem Teil eines zweiten Zeitfensters (D2) geplant ist, wenn der Ausstrahlungsplan des ersten Echtzeit-Rundfunkinhalts (C1) auf das zweite Zeitfenster (D2) ausgedehnt wird,
wobei das zweite Zeitfenster (D2) nach dem ersten Zeitfenster (D1) liegt und das zweite Zeitfenster (D2) ein Zeitfenster ist, in dem die Ausstrahlung eines zweiten Echtzeit-Rundfunkinhalts (C2) geplant ist, und
wobei der Prozessor (170) ferner dazu konfiguriert ist:
die virtuelle Kanalnummer und Informationen des zweiten Inhalts in mindestens eine der Kanallisteninformationen oder die Informationen des elektronischen Programmführers, EPG, aufzunehmen, die auf der Anzeige angezeigt werden sollen;
ein Bild einer Benutzeroberfläche, UI, anzuzeigen, das ein erstes Tastenobjekt (310) zum Auswählen des zweiten Inhalts in Abhängigkeit von der Benutzereingabe vor Ablauf des zweiten Zeitfensters (D2) und ein zweites Tastenobjekt (320) zum Auswählen des zweiten in Echtzeit gesendeten Inhalts (C2) auf der Anzeige (140) umfasst;
wenn ein Signal zum Auswählen des ersten Tastenobjekts (310) durch das Eingabegerät (110) empfangen wird, den zweiten Inhalt im zweiten Zeitfenster anzuzeigen; und
wenn ein Signal zum Auswählen des zweiten Tastenobjekts (320) durch das Eingabegerät (110) empfangen wird, den zweiten in Echtzeit gesendeten Inhalt im zweiten Zeitfenster anzuzeigen.

2. Anzeigegerät (10) nach Anspruch 1, wobei der Prozessor (170) weiter dazu konfiguriert ist:
den zweiten Inhalt auf der Anzeige (140) anzuzeigen, wenn die virtuelle Kanalnummer ausgewählt wird.

3. Anzeigegerät (10) nach Anspruch 1, wobei der Prozessor (170) weiter dazu konfiguriert ist:
wenn die virtuelle Kanalnummer aus den Kanallisteninformationen und den EPG-Informationen ausgewählt wird, den zweiten Inhalt auf der Anzeige (140) anzuzeigen.

4. Anzeigegerät (10) nach Anspruch 1, wobei der Prozessor weiter dazu konfiguriert ist:
ein Symbol einzuschließen, das den zweiten Inhalt in mindestens einem eines Infobanners des zweiten Inhalts, der virtuellen Kanalnummer oder der Informationen des zweiten Inhalts unterscheiden kann.

5. Anzeigegerät (10) nach Anspruch 1, wobei der Prozessor (170) weiter dazu konfiguriert ist:
wenn einer der zweiten in Echtzeit gesendeten Inhalte (C2) oder der zweite Inhalt durch das Eingabegerät (110) ausgewählt wird, den ausgewählten Inhalt auf der Anzeige (140) anzuzeigen.

6. Anzeigegerät (10) nach Anspruch 5, wobei der Prozessor (170) weiter dazu konfiguriert ist:
den ausgewählten Inhalt auf einem gesamten Bereich der Anzeige (140) anzuzeigen; und
einen nicht ausgewählten Inhalt auf einem Teilbereich der Anzeige (140) anzuzeigen.

7. Anzeigegerät (10) nach Anspruch 5, wobei der Prozessor (170) weiter dazu konfiguriert ist:
den ausgewählten Inhalt in einem linken oder rechten Bereich der Anzeige (140) anzuzeigen; und
einen nicht ausgewählten Inhalt in einem Bereich anzuzeigen, in dem der ausgewählte Inhalt nicht angezeigt wird.

8. Anzeigegerät (10) nach Anspruch 5, weiterhin umfassend:
eine zweite Kommunikationsschaltung (130), die zur Kommunikation mit einem externen elektronischen Gerät konfiguriert ist,
wobei der Prozessor (170) weiterhin dazu konfiguriert ist:
wenn entweder der zweite Echtzeit-Sendeinhalt (C2) oder der zweite Inhalt gemäß der Benutzereingabe ausgewählt wird, den ausgewählten Inhalt auf der Anzeige (140) anzuzeigen; und
einen nicht ausgewählten Inhalt auf einer Anzeige des externen elektronischen Geräts anzuzeigen.

9. Anzeigegerät (10) nach Anspruch 1, wobei der Prozessor (170) ferner dazu konfiguriert ist:
wenn die Sendung des zweiten Inhalts beendet ist, während der zweite Inhalt auf der Anzeige (140) angezeigt wird, den zweiten Echtzeit-Sendeinhalt (C2), der für die Sendung im zweiten Zeitfenster (D2) geplant ist, auf der Anzeige (140) anzuzeigen.

10. Verknüpfungsdienstverfahren durch ein Anzeigegerät (10), wobei das Verfahren Folgendes umfasst:
Empfangen von erstem Inhalt von einem ersten Netzwerk, das einem gemäß einer Benutzereingabe ausgewählten Kanal in einem ersten Zeitfenster (D1) entspricht, wobei der erste Inhalt einen ersten Echtzeit-Rundfunkinhalt (C1) umfasst und das erste Netzwerk ein Rundfunknetzwerk umfasst;
Empfangen von zweitem Inhalt, der mit dem ersten Inhalt verknüpft ist, über das erste Netzwerk oder ein zweites Netzwerk, das dem ausgewählten Kanal im ersten Zeitfenster entspricht;
wenn der zweite Inhalt empfangen wird, Zuweisen einer virtuellen Kanalnummer zu dem zweiten Inhalt; und
Einschließen der virtuellen Kanalnummer und von Informationen des zweiten Inhalts in mindestens eine von Kanallisteninformationen oder EPG-Informationen, die auf einer Anzeige (140) des Anzeigegeräts (10) angezeigt werden sollen,
wobei der erste Echtzeit-Sendeinhalt (C1) Inhalt ist, dessen Sendung im ersten Zeitfenster (D1) geplant ist, und im ersten Zeitfenster (D1) gesendet wird,
wobei der zweite Inhalt Inhalt ist, dessen Ausstrahlung in zumindest einem Teil eines zweiten Zeitfensters (D2) geplant ist, wenn der Sendeplan des ersten Echtzeit-Sendeinhalts (C1) auf das zweite Zeitfenster (D2) ausgedehnt wird,
wobei das zweite Zeitfenster (D2) nach dem ersten Zeitfenster (D1) liegt und das zweite Zeitfenster (D2) ein Zeitfenster ist, in dem die Ausstrahlung eines zweiten Echtzeit-Sendeinhalts (C2) geplant ist, und
wobei
das Verfahren ferner Folgendes umfasst:
Anzeigen eines Bildes einer Benutzeroberfläche, UI, einschließlich eines ersten Tastenobjekts (310) zum Auswählen des zweiten Inhalts in Abhängigkeit von der Benutzereingabe vor Ablauf des zweiten Zeitfensters (D2) und eines zweiten Tastenobjekts (320) zum Auswählen des zweiten Echtzeit-Sendeinhalts (C2) auf der Anzeige (140);
wenn ein Signal zum Auswählen des ersten Tastenobjekts (310) durch das Eingabegerät (110) empfangen wird, Anzeigen des zweiten Inhalts im zweiten Zeitfenster; und
wenn ein Signal zum Auswählen des zweiten Tastenobjekts (320) durch das Eingabegerät (110) empfangen wird, Anzeigen des zweiten Echtzeit-Sendeinhalts im zweiten Zeitfenster.

11. Verfahren nach Anspruch 10, ferner umfassend:
Empfangen von Verknüpfungsdienstinformationen zum Bereitstellen einer Benachrichtigung, dass der zweite Inhalt, der im zweiten Zeitfenster (D2) gesendet wird, von einem Verknüpfungsdienst bereitgestellt wird.

12. Verfahren nach Anspruch 10, ferner umfassend:
Überprüfen, ob die virtuelle Kanalnummer gemäß der Benutzereingabe ausgewählt wurde oder ob die virtuelle Kanalnummer angegeben und ausgewählt wurde; und
wenn die virtuelle Kanalnummer ausgewählt wurde, Anzeigen des zweiten Inhalts auf der Anzeige (140).

13. Verfahren nach Anspruch 10, ferner umfassend:
wenn die virtuelle Kanalnummer aus den Kanallisteninformationen und den EPG-Informationen ausgewählt wird, Anzeigen des zweiten Inhalts auf der Anzeige (140).

14. Verfahren nach Anspruch 10, ferner umfassend:
Einschließen eines Symbols, das den zweiten Inhalt in mindestens einem eines Infobanners des zweiten Inhalts, der virtuellen Kanalnummer oder der Informationen des zweiten Inhalts unterscheiden kann.

## Revendications

1. Dispositif d'affichage (10), comprenant :
un affichage (140) ;
un dispositif d'entrée (110) configuré pour recevoir une entrée utilisateur ;
un premier circuit de communication (120) configuré pour :
recevoir un premier contenu d'un premier réseau correspondant à un premier canal sélectionné en fonction de l'entrée utilisateur dans un premier créneau temporel (D1), dans lequel le premier contenu comprend un premier contenu de diffusion en temps réel (C1) et le premier réseau comprend un réseau de diffusion, et
recevoir un second contenu associé au premier contenu sur le premier réseau ou un second réseau correspondant au premier canal ; et
un processeur (170) configuré pour, lorsque le second contenu est reçu, attribuer un numéro de canal virtuel au second contenu,
dans lequel le premier contenu de diffusion en temps réel (C1) est un contenu programmé pour être diffusé dans un premier créneau temporel (D1) du premier canal et est diffusé dans le premier créneau temporel (D1),
dans lequel le second contenu est un contenu programmé pour être diffusé dans au moins une partie d'un second créneau temporel (D2) lorsque le programme de diffusion du premier contenu de diffusion en temps réel (C1) est étendu au second créneau temporel (D2),
dans lequel le second créneau temporel (D2) est après le premier créneau temporel (D1) et le second créneau temporel (D2) est un créneau temporel dans lequel un second contenu de diffusion en temps réel (C2) est programmé pour être diffusé, et
dans lequel le processeur (170) est en outre configuré pour :
inclure le numéro de canal virtuel et des informations du second contenu dans au moins une des informations de liste de canaux ou des informations de guide de programme électronique, EPG, à afficher sur l'affichage ;
afficher une image d'interface utilisateur, UI, comportant un premier objet clé (310) pour sélectionner le second contenu en fonction de l'entrée utilisateur avant l'expiration du second créneau temporel (D2) et un second objet clé (320) pour sélectionner le second contenu de diffusion en temps réel (C2), sur l'affichage (140) ;
lorsqu'un signal pour sélectionner le premier objet clé (310) par le dispositif d'entrée (110) est reçu, afficher le second contenu dans le second créneau temporel ; et
lorsqu'un signal pour sélectionner le second objet clé (320) par le dispositif d'entrée (110) est reçu, afficher le second contenu de diffusion en temps réel dans le second créneau temporel.

2. Dispositif d'affichage (10) selon la revendication 1, dans lequel le processeur (170) est en outre configuré pour :
afficher le second contenu sur l'affichage (140) lors de la sélection du numéro de canal virtuel.

3. Dispositif d'affichage (10) selon la revendication 1, dans lequel le processeur (170) est en outre configuré pour :
lorsque le numéro de canal virtuel est sélectionné à partir des informations de liste de canaux et des informations EPG, afficher le second contenu sur l'affichage (140).

4. Dispositif d'affichage (10) selon la revendication 1, dans lequel le processeur est en outre configuré pour :
inclure un symbole capable de distinguer le second contenu dans au moins l'un d'une bannière d'informations du second contenu, du numéro de canal virtuel ou des informations du second contenu.

5. Dispositif d'affichage (10) selon la revendication 1, dans lequel le processeur (170) est en outre configuré pour :
lorsque l'un du second contenu de diffusion en temps réel (C2) ou du second contenu est sélectionné par le dispositif d'entrée (110), afficher le contenu sélectionné sur l'affichage (140).

6. Dispositif d'affichage (10) selon la revendication 5, dans lequel le processeur (170) est en outre configuré pour :
afficher le contenu sélectionné sur une région entière de l'affichage (140) ; et
afficher un contenu non sélectionné sur une région partielle de l'affichage (140).

7. Dispositif d'affichage (10) selon la revendication 5, dans lequel le processeur (170) est en outre configuré pour :
afficher le contenu sélectionné sur une région gauche ou une région droite de l'affichage (140) ; et
afficher un contenu non sélectionné sur une région où le contenu sélectionné n'est pas affiché.

8. Dispositif d'affichage (10) selon la revendication 5, comprenant en outre :
un second circuit de communication (130) configuré pour communiquer avec un dispositif électronique externe,
dans lequel le processeur (170) est en outre configuré pour :
lorsque l'un du second contenu de diffusion en temps réel (C2) ou du second contenu est sélectionné en fonction de l'entrée utilisateur, afficher le contenu sélectionné sur l'affichage (140) ; et
afficher un contenu non sélectionné sur un affichage du dispositif électronique externe.

9. Dispositif d'affichage (10) selon la revendication 1, dans lequel le processeur (170) est en outre configuré pour :
lorsque la diffusion du second contenu est terminée alors que le second contenu est affiché sur l'affichage (140), afficher le second contenu de diffusion en temps réel (C2) programmé pour être diffusé dans le second créneau temporel (D2) sur l'affichage (140).

10. Procédé de service de liaison par un dispositif d'affichage (10), le procédé comprenant :
la réception d'un premier contenu à partir d'un premier réseau correspondant à un canal sélectionné en fonction d'une entrée utilisateur dans un premier créneau temporel (D1), dans lequel le premier contenu comprend un premier contenu de diffusion en temps réel (C1) et le premier réseau comprend un réseau de diffusion ;
la réception d'un second contenu associé au premier contenu sur le premier réseau ou un second réseau correspondant au canal sélectionné dans le premier créneau temporel ;
lorsque le second contenu est reçu, l'attribution d'un numéro de canal virtuel au second contenu ; et
l'inclusion du numéro de canal virtuel et d'informations du second contenu dans au moins une des informations de liste de canaux ou des informations EPG à afficher sur un affichage (140) du dispositif d'affichage (10),
dans lequel le premier contenu de diffusion en temps réel (C1) est un contenu programmé pour être diffusé dans le premier créneau temporel (D1) et est diffusé dans le premier créneau temporel (D1),
dans lequel le second contenu est un contenu programmé pour être diffusé dans au moins une partie d'un second créneau temporel (D2) lorsque le programme de diffusion du premier contenu de diffusion en temps réel (C1) est étendu au second créneau temporel (D2),
dans lequel le second créneau temporel (D2) est après le premier créneau temporel (D1) et le second créneau temporel (D2) est un créneau temporel dans lequel un second contenu de diffusion en temps réel (C2) est programmé pour être diffusé, et dans lequel le procédé comprend en outre :
l'affichage d'une image d'interface utilisateur, UI, comportant un premier objet clé (310) pour sélectionner le second contenu en fonction de l'entrée utilisateur avant l'expiration du second créneau temporel (D2) et un second objet clé (320) pour sélectionner le second contenu de diffusion en temps réel (C2), sur l'affichage (140) ;
lorsqu'un signal pour sélectionner le premier objet clé (310) par le dispositif d'entrée (110) est reçu, afficher le second contenu dans le second créneau temporel ; et
lorsqu'un signal pour sélectionner le second objet clé (320) par le dispositif d'entrée (110) est reçu, afficher le second contenu de diffusion en temps réel dans le second créneau temporel.

11. Procédé selon la revendication 10, comprenant en outre :
la réception d'informations de service de liaison pour fournir une notification indiquant que le second contenu qui est diffusé dans le second créneau temporel (D2) est fourni par un service de liaison.

12. Procédé selon la revendication 10, comprenant en outre :
le fait de vérifier si le numéro de canal virtuel est sélectionné en fonction de l'entrée utilisateur ou si le numéro de canal virtuel est spécifié et sélectionné ; et
lorsque le numéro de canal virtuel est sélectionné, l'affichage du second contenu sur l'affichage (140).

13. Procédé selon la revendication 10, comprenant en outre :
lorsque le numéro de canal virtuel est sélectionné à partir des informations de liste de canaux et des informations EPG, l'affichage du second contenu sur l'affichage (140).

14. Procédé selon la revendication 10, comprenant en outre :
le fait de comporter un symbole capable de distinguer le second contenu dans au moins l'un d'une bannière d'information du second contenu, du numéro de canal virtuel ou des informations du second contenu.
